# FASCICULE DE BREVET EUROPEEN

(11) **EP 0 562 911 B1**
(45) Date de publication et mention de la délivrance du brevet: **13.12.1995**
(21) Numéro de dépôt: 93400664.4
(22) Date de dépôt: 16.03.1993
(51) Int. Cl.: G01B 11/27, G02B 6/38

(54) **Procédé de mesure relative de l'axe d'une ouverture et de l'axe d'un contour cylindrique**
Verfahren zur relativen Messung der Achse eienr Öffnung und der Achse einer zylindrischen Kontur
Method for the relative measurement of the axis of an opening and of the axis of a cylindrical contour

(30) Priorité: 26.03.1992 FR 9203657
(43) Date de publication de la demande: 29.09.1993
(73) Titulaire: FRAMATOME CONNECTORS INTERNATIONAL, 92084 Paris La Défense (FR)
(72) Inventeur: Ollivier, Jean-François, F-22230 Merdrignac (FR); Lalaouna, Said, F-72400 La Ferte Bernard (FR); Penha, Manuel, F-72100 Le Mans (FR)
(74) Mandataire: Keib, Gérard

(56) Documents cités:
- FR-A- 2 533 710
- GB-A- 2 065 300
- GB-A- 2 160 654
- GB-A- 2 200 456

## Description

La présente invention a pour objet un procédé de mesure de la position relative des axes d'une ouverture et d'un contour cylindrique d'un échantillon, notamment une virole (ou férule) pour connecteur à fibre optique et permettant notamment de mesurer la coaxialité et/ou la concentricité desdits axes.

Les viroles pour connecteur à fibre optique présentent un contour extérieur de diamètre nominal 2500 microns (+ ou - 1 micron) et une ouverture coaxiale au contour extérieur et en général présentant un diamètre nominal de 125 microns. Les performances des connecteurs à fibres optiques dépendent en particulier de la précision avec laquelle l'ouverture est positionnée par rapport au contour cylindrique de référence. Etant données les tolérances mentionnées ci-dessus et le niveau de performance exigé pour de tels connecteurs, les exigences de précision pour la mesure de la concentricité et/ou de la coaxialité sont elles-mêmes élevées du fait que les relevés de la position des axes doivent être effectués avec une précision meilleure que le micron.

Le rapport des diamètres de l'ouverture et du contour extérieur étant important, de l'ordre de 20 pour une virole, les moyens de contrôle optique actuellement connus ne sont pas capables d'agrandir avec un même objectif les deux diamètres. La réalisation d'une telle mesure impliquerait en effet un changement d'objectif introduisant des imprécisions s'ajoutant aux tolérances des tables de déplacement du banc de mesure, d'où un niveau de précision incompatible avec la précision souhaitée.

En outre, les moyens classiques de mesure à l'aide de micro-palpeurs ne sont pas souhaitables pour réaliser des mesures sur des matériaux plastiques en raison de leur dureté en surface insuffisante. En effet, l'impact du micro-palpeur sur la surface produit un enfoncement de l'ordre de quelques microns qui détériore irrémédiablement la précision de mesure.

La présente invention a pour objet un procédé de mesure permettant d'éviter les inconvénients précités et qui permette, sans complication notable, de réaliser des mesures de concentricité et/ou de coaxialité avec une précision élevée, notamment meilleure que le micron, tout en étant compatible avec une automatisation.

Dans ce but, l'invention concerne un procédé de mesure de la position relative des axes d'une ouverture et d'un contour cylindrique d'un échantillon caractérisé en ce qu'il comporte les étapes suivantes :
- introduire dans ladite ouverture une pige calibrée ;
- effectuer des mesures pour déterminer au moins un couple de segments représentatifs des points milieu respectivement du contour cylindrique et de la pige calibrée.

Ces mesures sont avantageusement réalisées à l'aide d'un faisceau lumineux présentant un balayage parallèlement à lui-même dans une direction perpendiculaire à l'axe du contour cylindrique, la détermination des points extrêmes du contour cylindrique permettant de déduire la position des points milieu.

Selon un mode de réalisation préféré, le procédé comporte une étape de chauffage de l'échantillon de manière à dilater sensiblement ladite ouverture avant introduction de la pige calibrée, et le refroidissement de l'échantillon de telle sorte que la pige soit montée serrée dans ladite ouverture.

De ce fait, on est sûr que la pige calibrée ne présente pas de jeu dans l'ouverture et que son axe soit donc pratiquement confondu avec l'axe de l'ouverture.

Le procédé peut comporter une étape d'évaluation de la coaxialité, en calculant l'angle entre deux segments d'un même couple de segments.

Le procédé peut comporter une étape de détermination de la position d'une extrémité de l'échantillon comportant ladite ouverture et une étape d'évaluation de la concentricité en calculant l'écart de position entre deux segments d'un même couple à l'extrémité de l'échantillon.

Le procédé peut comporter plusieurs séries de mesures pour déterminer une pluralité desdits couples de segments pour différentes déviations angulaires de l'échantillon autour de l'axe de son contour cylindrique.

D'autres caractéristiques et avantages de l'invention apparaîtront à lecture de la description qui va suivre, donnée à titre d'exemple non limitatif, en liaison avec les dessins qui représentent :
- la figure 1, une vue en coupe agrandie de l'extrémité avant d'un échantillon à mesurer ;
- la figure 2 une vue en coupe d'un échantillon avec une ouverture dans laquelle a été introduite une pige calibrée ;
- la figure 3, une vue d'un échantillon par son extrémité avant ;
- la figure 4, un banc de mesure optique du type à rideau de lumière ;
- la figure 5, des couples de segments de mesure pour diverses positions angulaires d'un échantillon ;
- les figures 6a et 6b, les étapes de chauffage d'un échantillon, et d'introduction d'une pige calibrée dans l'ouverture de celui-ci.

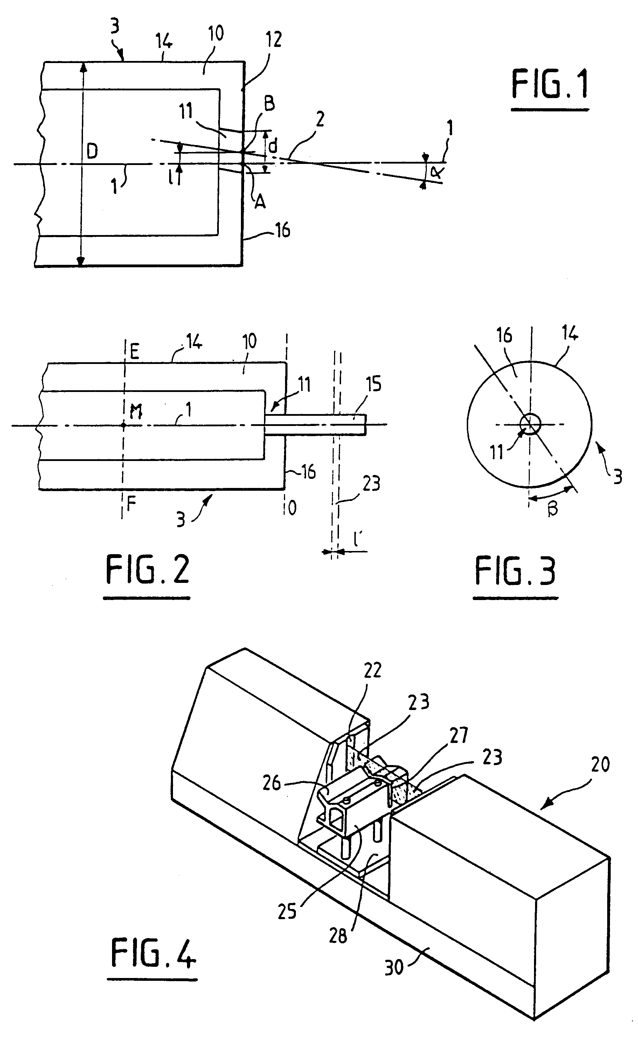

Selon la figure 1, un échantillon à mesurer 3 présente une portion cylindrique 10 dont le contour extérieur de référence 14 a un diamètre D, ainsi qu'une extrémité avant 12 présentant une ouverture 11 de diamètre d. Le contour cylindrique 14 présente un axe longitudinal 1 qui intercepte en un point A le plan avant 16 de l'extrémité 12. L'ouverture 11 présente un axe longitudinal 2 qui intercepte le plan d'extrémité 16 en un point B. Les axes 1 et 2 font entre eux un angle alpha représentatif de la coaxialité des axes 1 et 2. La distance l entre les points A et B représente la concentricité entre les axes 1 et 2. A la figure 1, en vue de permettre une représentation sur la figure, on a bien entendu exagéré les défauts de concentricité et de coaxialité.

Pour effectuer une mesure selon l'invention, on dispose une pige calibrée 15 dans l'ouverture 11 de manière qu'elle dépasse vers l'avant de l'échantillon 3, d'une distance de 5 à 7 mm.

On réalise ensuite une mesure des points extrêmes E et F du contour 14 de la pige 15 à l'aide d'un banc de mesure dimensionnel par ombroscopie laser connu en soi et commercialisé sous la dénomination LASERMIKE par la société ORC - 77680 ROISSY-EN-BRIE, en particulier le modèle 183-100 comportant un laser à hélium-néon fournissant un faisceau 23 de longueur d'onde 632,8 mm et formant un rideau laser de hauteur donnée grâce à la mise en oeuvre d'un miroir rotatif et de lentilles collimatrices non représentées. Le banc de contrôle comporte une pièce de base 25 présentant une surface de référence 26 en forme de V disposée dans une direction longitudinale de la pièce de base 25, et une fente transversale 27 destinée à laisser passer le rayonnement laser lorsque le contour de référence 14 d'un échantillon 3 dont on veut mesurer les paramètres est positionné dans la rainure en forme de V, de manière que son axe 1 soit perpendiculaire au faisceau 23.

L'introduction d'un échantillon 3 crée un segment d'ombre qui génère un signal électrique dont la durée est proportionnelle à la dimension de l'objet à mesurer, cette durée étant en rapport avec la vitesse de balayage du faisceau laser 23. Le signal électrique est décodé et permet de restituer le diamètre de l'échantillon, mais également la position des points extrêmes E et F en détectant les moments où le faisceau 23 est masqué ou non par l'échantillon 3. La résolution est de l'ordre de 0,2 micron.

La position mesurée de l'axe 1 est obtenue en réalisant un certain nombre de mesures le long du contour cylindrique 14 et en traçant le segment correspondant au point milieu M des segments E, F. Il en va de même pour l'axe 2 de l'ouverture 11 pour lequel on détermine un segment composé des points milieu des segments E et F déterminés le long de la pige cylindrique 15. Des séries de mesures peuvent être renouvelées pour diverses valeurs de l'angle β (voir figure 3) de manière à apporter des informations supplémentaires sur les angles β dans lesquelles les défauts de coaxialité et/ou de concentricité sont présents.

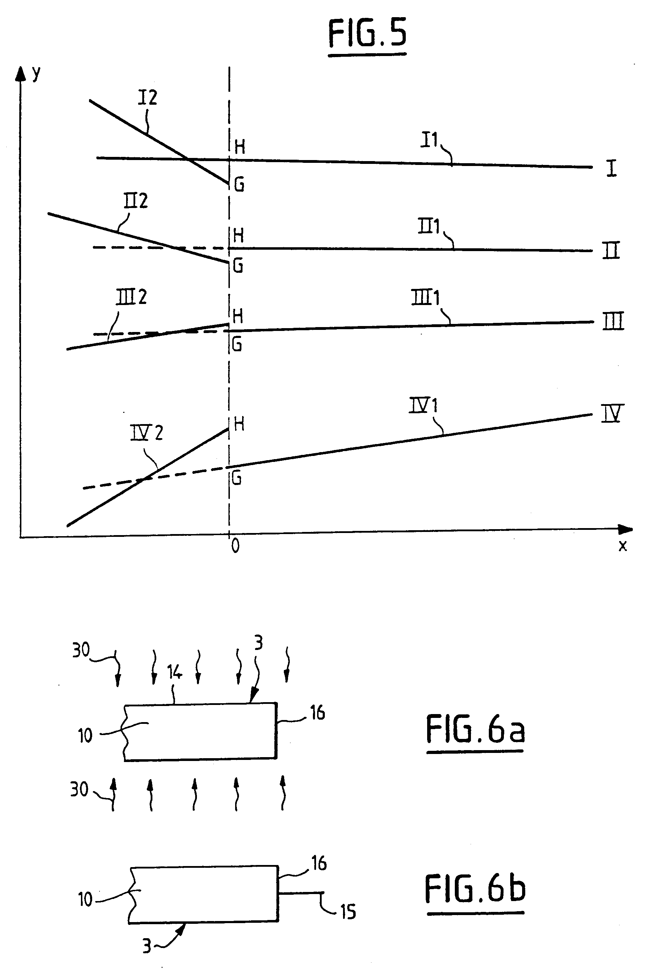

On obtient ainsi des tracés de couples de segment de courbe (I1, I2), (II1, II2), (III1, III2), (IV1, IV2) représentés à la figure 5. On a en abscisse la position du point de mesure dans la direction longitudinale de l'échantillon et de la pige, et en ordonnée le positionnement des axes. Les courbes I, II, III et IV correspondent à différentes valeurs de l'angle β.

L'ombroscopie laser permet également de déterminer le point O correspondant au plan d'extrémité 16 de l'échantillon 3 pour lequel on observe une discontinuité de la valeur du diamètre mesuré. Pour améliorer notamment la précision de détermination de ce point O, il est avantageux d'opérer avec un faisceau 23 de largeur l réduite (par exemple de l'ordre de 20 microns). Des piges de précision supérieure et inférieure réduisant la hauteur du faisceau et induisant des ruptures de faisceau nettes peuvent être mises en oeuvre pour améliorer la précision de détermination de l'axe de la virole.

La valeur de coaxialité est déterminée directement sur les courbes de la figure 5 par l'angle que font entre eux deux segments d'un même couple, en tenant compte bien entendu de la dilatation d'échelle en ordonnée. La valeur de la concentricité est donnée par la longueur des segments G H pour l'abscisse du point O correspondant au plan d'extrémité 16.

On peut réaliser des séries de mesures en tournant l'échantillon 3 d'un angle β de quelques degrés entre chaque série de mesures, jusqu'à détermination d'un écart maximal en coaxialité et/ou concentricité. On repère ainsi les angles (β₀, β₁) suivant lequel chaque défaut est orienté. Il est également possible à partir d'un nombre de sens de mesures donné de déduire par le calcul les angles β₀ et β₁.

Une précision optimale est obtenue lorsque la pige 15 est montée sans jeu dans l'ouverture 11 de la virole 3. Pour ce faire, la virole 3 (figure 6a) est légèrement chauffée (en 30), afin de dilater de quelques dixièmes de microns le diamètre de l'ouverture 11 et la pige étalon 15 est alors placée (figure 6b) dans l'ouverture 11 de la virole 3. Ensuite, on laisse l'ensemble se refroidir à la température ambiante et on contrôle de nouveau le diamètre extérieur 14 de la férule 3 pour contrôler que sa valeur est la même qu'avant dilatation.

On notera par ailleurs que les mesures en rotation tolèrent une légère non perpendicularité entre la virole et le faisceau car il s'agit de mesures relatives et de plus, une sommation des minima et des maxima est réalisée pour chaque position.

## Revendications

1. Procédé de mesure de la position relative des axes d'une ouverture et d'un contour cylindrique d'un échantillon caractérisé en ce qu'il comporte les étapes suivantes :
- introduire dans ladite ouverture (11) une pige calibrée (15) ;
- effectuer des mesures pour déterminer au moins un couple de segments (I - IV) représentatifs des points milieu respectivement du contour cylindrique (14) et de la pige calibrée (15).

2. Procédé selon la revendication 1 caractérisé en ce que lesdites mesures comportent une étape d'envoyer un faisceau lumineux (23) présentant un balayage parallèlement à lui-même dans une direction perpendiculaire à l'axe (1) du contour cylindrique (14) de déterminer les points extrêmes (E, F) du contour cylindrique (14) et une étape de déterminer lesdits points milieu (M).

3. Procédé selon l'une des revendications précédentes caractérisé en ce qu'il comporte une étape de chauffage de l'échantillon (3) de manière à dilater sensiblement ladite ouverture (11) avant introduction de la pige calibrée (15) et de refroidissement de l'échantillon, de telle sorte que la pige (15) soit montée serrée dans ladite ouverture (11).

4. Procédé selon l'une des revendications 1 à 3, caractérisé en ce qu'il comporte une étape d'évaluation de la coaxialité en calculant l'angle entre deux segments d'un même coupe de segments (I1-I2).

5. Procédé selon l'une des revendications précédentes, caractérisé en ce qu'il comporte une étape de détermination de la position d'un plan d'extrémité (16) de l'échantillon (3) comportant ladite ouverture (11) et une étape d'évaluation de la concentricité en calculant l'écart de position (GH) entre deux segments d'un même couple (I1-I2) à l'extrémité de l'échantillon (3).

6. Procédé selon l'une des revendications précédentes caractérisé en ce qu'il comporte plusieurs séries de mesures pour déterminer une pluralité desdits couples de segments (I1, I2, II1, II2, III1, III2, IV1, IV2) pour différentes déviations angulaires (β) de l'échantillon autour de l'axe (1) de son contour cylindrique (14).

7. Procédé selon une des revendications précédentes caractérisé en ce que ledit échantillon (3) est une virole pour connecteur à fibre optique.

## Claims

1. Process for measuring the relative position of the axes of an aperture and of a cylindrical outline of a sample characterized in that it includes the following steps:
- introducing a calibrated rod (15) into the said aperture (11);
- making measurements to determine at least one pair of segments (I - IV) representative of the mid-points of the cylindrical outline (14) and of the calibrated rod (15) respectively.

2. Process according to Claim 1, characterized in that the said measurements include a step of despatching a light beam (23) exhibiting a scan parallel to itself in a direction perpendicular to the axis (1) of the cylindrical outline (14) for determining the extreme points (E, F) of the cylindrical outline (14) and a step of determining the said mid-points (M).

3. Process according to one of the preceding claims characterized in that it includes a step of heating the sample (3) so as substantially to expand the said aperture (11) before introducing the calibrated rod (15) and of cooling the sample, so that the rod (15) is fitted tightly into the said aperture (11).

4. Process according to one of Claims 1 to 3, characterized in that it includes a step of evaluating the coaxiality by calculating the angle between two segments of one and the same pair of segments (I1-I2).

5. Process according to one of the preceding claims, characterized in that it includes a step of determining the position of an end plane (16) of the sample (3) containing the said aperture (11) and a step of evaluating the concentricity by calculating the positional discrepancy (GH) between two segments of one and the same pair (I1-I2) at the end of the sample (3).

6. Process according to one of the preceding claims characterized in that it includes several series of measurements to determine a plurality of the said pairs of segments (I1, I2, II1, II2, III1, III2, IV1, IV2) for various angular deviations (β) of the sample about the axis (1) of its cylindrical outline (14).

7. Process according to one of the preceding claims characterized in that the said sample (3) is a ferrule for a fibre-optic connector.

## Patentansprüche

1. Verfahren zum Messen der relativen Position der Achsen einer Öffnung und eines zylindrischen Umrisses eines Musters,
dadurch gekennzeichnet, daß es die folgenden Schritte umfaßt:
- Einführen eines kalibrierten Pegelstabs (15) in die Öffnung (11);
- Ausführen von Messungen, um mindestens ein Paar Segmente (I - IV) festzulegen, die repräsentativ sind für die Mittelpunkte jeweils des zylindrischen Umrisses (14) und des kalibrierten Pegelstabs (15).

2. Verfahren gemäß Anspruch 1,
dadurch gekennzeichnet, daß die Messungen einen Schritt umfassen, bei dem ein Lichtstrahl (23) sich parallel zu sich selbst und in senkrechter Richtung zur Achse (1) des zylindrischen Umrisses (14) bewegt, um die Endpunkte (E, F) des zylindrischen Umrisses (14) zu erfassen sowie einen Schritt, bei dem die Mittelpunkte (M) erfaßt werden.

3. Verfahren gemäß einem der vorherigen Ansprüche,
dadurch gekennzeichnet, daß es einen Schritt umfaßt, bei dem das Muster (3) aufgeheizt wird, um die Öffnung (11) vor Einführen des kalibrierten Pegelstabs (15) merklich zu dehnen, gefolgt von der Abkühlung des Musters, so daß der Pegelstab (15) in der Öffnung (11) fest sitzt.

4. Verfahren gemäß einem der Ansprüche 1 bis 3,
dadurch gekennzeichnet, daß es einen Schritt zum Bewerten der Koaxialität umfaßt, wobei der Winkel zwischen zwei Segmenten eines gleichen Segmentschnitts (I1 - I2) berechnet wird.

5. Verfahren gemäß einem der vorherigen Ansprüche,
dadurch gekennzeichnet, daß es einen Schritt zur Erfassung der Position einer Endebene (16) des Musters (3) umfaßt, welche die Öffnung (11) enthält, sowie einen Schritt zum Bewerten der Konzentrizität durch Berechnung des Abstandes zwischen den Positionen (GH) zweier Segmente eines selben Paars (I1 - I2) am Ende des Musters (3).

6. Verfahren gemäß einem der vorherigen Ansprüche,
dadurch gekennzeichnet, daß es mehrere Meßreihen umfaßt, um eine Mehrzahl der Segmentpaare (I1, I2, II1, II2, III1, III2, IV1, IV2) für verschiedene Winkelabweichungen (β) des Musters um die Achse (1) seines zylindrischen Umrisses (14) zu erfassen.

7. Verfahren gemäß einem der vorherigen Ansprüche,
dadurch gekennzeichnet, daß es sich beim Muster (3) um einen Ring für ein Verbindungsteil für optische Fasern handelt.
